Europäisches Patentamt

European Patent Office

Office européen des brevets

(11) Numéro de publication: **0 188 950 B1**

# FASCICULE DE BREVET EUROPEEN

(45) Date de publication du fascicule du brevet:
19.07.89

(51) Int. Cl.⁴: **B01D 13/04**, C04B 41/87

(21) Numéro de dépôt: 85402538.4

(22) Date de dépôt: 18.12.85

(54) Procédé de fabrication de membranes minérales, poreuses et perméables.

(30) Priorité: 28.12.84 FR 8420012

(43) Date de publication de la demande:
30.07.86 Bulletin 86/31

(45) Mention de la délivrance du brevet:
19.07.89 Bulletin 89/29

(84) Etats contractants désignés:
BE DE GB NL

(56) Documents cités:
EP-A- 0 040 282
EP-A- 0 136 937
CH-A- 604 826
FR-A- 865 695
FR-A- 1 517 389
FR-A- 2 463 636
LU-A- 56 944
US-A- 3 926 799

(73) Titulaire: COMMISSARIAT A L'ENERGIE ATOMIQUE,
31/33, rue de la Fédération, F-75015 Paris(FR)

(72) Inventeur: Berardo, Michel, Place Clément V,
F-30150 Roquemaure(FR)
Inventeur: Charpin, Jean, 38 Bis, Avenue René Coty,
F-75014 Paris(FR)
Inventeur: Martinet, Jean-Marie, Le Jabron 2 Escaller B
Ru du Général Pau, F-26200 Montelimar(FR)

(74) Mandataire: Mongrédien, André et al, c/o
BREVATOME 25, rue de Ponthieu, F-75008 Paris(FR)

## Description

La présente invention a pour objet un procédé de fabrication de membranes minérales, microporeuses et perméables, supportées par un substrat macroporeux.

De façon plus précise, elle concerne la fabrication de membranes minérales, microporeuses et perméables, présentant des rayons moyens de pores très faibles, par exemple inférieurs à 5 nm (50 Å), susceptibles d'être utilisés pour la séparation par ultrafiltration de produits dérivés du pétrole, par exemple pour la régénération des huiles usées.

L'un des procédés classiques pour fabriquer des membranes microporeuses consiste à déposer sur un substrat poreux et perméable à partir d'une suspension dans un liquide de grains ou d'agglomérats de grains de poudre, une ou plusieurs couches actives, puis à sécher la ou les couches déposées, à les comprimer et à fritter l'ensemble ainsi obtenu, comme il est décrit dans le brevet français FR-A- 2 527 092 déposé par le Commissariat à l'Energie Atomique.

Selon ce procédé de l'art antérieur, l'opération de compression est indispensable ; en effet, cette compression est nécessaire pour réaliser une réorganisation de la ou des couches déposées sur le substrat, de façon à obtenir une texture microporeuse homogène ne présentant pas de macroporosité, et pour obtenir une bonne résistance mécanique en augmentant la cohésion au sein de la ou des couche(s) et, éventuellement, leur adhérence sur le substrat.

Par ailleurs, avec ce procédé de l'art antérieur où l'on part d'une suspension de poudres dans un liquide, il est difficile d'obtenir des membranes ayant des pores de dimensions très faibles.

Le procédé, objet de l'invention, permet d'obtenir des membranes minérales, microporeuses et perméables, ayant des pores de dimensions très faibles, supportées par un substrat poreux, selon une mise en oeuvre plus simple que celle décrite précédemment, notamment en ce qu'il n'est pas nécessaire d'effectuer une étape de compression. Par ailleurs, ce procédé permet le dépôt d'une couche microporeuse à l'intérieur d'un tube macroporeux de petit diamètre.

Le procédé de fabrication d'une membrane minérale, poreuse et perméable, selon l'invention, se caractérise en ce que l'on forme sur un substrat poreux et perméable une couche mince d'au moins un composé minéral choisi parmi les oxydes métalliques simples ou mixtes, sauf l'oxyde d'aluminium et les oxydes mixtes d'aluminium, les hydroxydes métalliques simples ou mixtes, sauf l'hydroxyde d'aluminium et les hydroxydes mixtes d'aluminium, et leurs mélanges, à partir d'une suspension dans un liquide de particules colloïdales ou non colloïdales dudit composé ou d'un précurseur dudit composé ayant des dimensions de grains inférieures à 10 μm, ladite suspension étant obtenue par précipitation à partir d'une solution d'alcoolate ou de sel métallique, on sèche la membrane ainsi obtenue, puis on la soumet à une cuisson à une température comprise entre 400 et 1100°C.

Selon une variante de réalisation de l'invention, on forme sur le substrat poreux et perméable une couche mince dudit composé minéral dans laquelle est dispersée une charge, et on utilise dans ce cas une suspension comprenant de plus une charge. La charge ajoutée permet de conférer à la membrane des propriétés particulières. Par exemple, on peut utiliser une charge en carbone pour conférer à la membrane des propriétés de conductivité électrique à condition bien entendu de réaliser la cuisson en atmosphère non oxydante pour ne pas altérer les particules de carbone.

Les oxydes et les hydroxydes métalliques utilisés dans l'invention peuvent être de différents types. Ils peuvent être en particulier sous la forme d'oxydes et d'hydroxydes simples ou sous la forme d'oxydes et d'hydroxydes mixtes. A titre d'exemple, on peut citer les oxydes et hydroxydes simples ou mixtes de métaux choisis parmi le titane, le zirconium, le silicium, le magnésium, le calcium, le cobalt, le manganèse et le nickel.

Dans certains cas, on peut ajouter à l'un de ces oxydes ou hydroxydes un autre oxyde ou hydroxyde en plus faible proportion pour améliorer certaines propriétés de la membrane. Ainsi, on peut utiliser au moins un premier composé minéral choisi parmi l'oxyde de titane, l'oxyde de zirconium et l'oxyde de silicium et au moins un second composé minéral choisi parmi l'oxyde d'yttrium, les oxydes de lanthanides, l'oxyde de vanadium, l'oxyde de calcium et l'oxyde de magnésium.

Lorsque le premier composé minéral est de l'oxyde de zirconium, le second composé minéral joue avantageusement le rôle de stabilisant afin de supprimer dans le cas de la zircone les effets néfastes du passage de la forme monoclinique à la forme quadratique car celui-ci s'accompagne d'une importante variation de volume.

Pour la mise en oeuvre du procédé de l'invention, on peut préparer la suspension de particules colloïdales ou non colloïdales du ou des composés minéraux par différentes méthodes.

Lorsque l'on utilise une suspension de particules colloïdales ayant des dimensions de grains inférieures à 10 μm, et de préférence une granulométrie moyenne inférieure ou égale à 0,2 μm, on peut préparer cette suspension par précipitation dudit composé minéral suivie d'un traitement de peptisation du précipité pour le transformer en particules colloïdales plus fines.

Lorsque le composé minéral est un oxyde, ou un hydroxyde, la réaction de précipitation peut être obtenue par hydrolyse d'une solution organique d'un ou plusieurs alcoolates métalliques ou par neutralisation d'une solution acide d'un ou plusieurs sels métalliques.

Après cette opération, on divise en particules plus fines le précipité obtenu par peptisation au moyen d'un acide fort tel que l'acide perchlorique ou l'acide chlorhydrique. Pour réaliser cette réaction de peptisation, on choisit la température, la concentration en acide et la durée de réaction de façon à convertir la totalité du précipité en particules colloïdales ayant des dimensions appropriées. Ceci permet d'obtenir des particules très divisées ayant par exemple des dimensions de grains de l'order de 25 à 100 nm (250 à 1000 Å), ce qui est favorable pour l'obtention d'une couche très mince présentant après cuisson des rayons moyens de pores très faibles.

Lorsque l'on utilise une suspension de particules colloïdales, on peut aussi préparer cette suspension par précipitation du composé minéral et application d'énergie au milieu réactionnel.

La réaction de précipitation peut être effectuée comme précédemment par hydrolyse d'une solution organique d'un ou plusieurs alcoolates métalliques ou par neutralisation d'une solution acide d'un ou plusieurs sels métalliques.

Après ou pendant cette opération, on divise en particules plus fines le précipité obtenu par application d'énergie au milieu réactionnel. L'énergie utilisée peut être une énergie mécanique, par exemple de l'énergie ultrasonore, ou de l'énergie électrique par exemple un champ électrique ou encore consister en une irradiation.

Lorsque l'on utilise cette dernière technique pour préparer la suspension de particules colloïdales, il est préférable d'utiliser la suspension très rapidement car sa stabilité au stockage est moins bonne que dans le cas précédent où l'on soumet le précipité obtenu à une peptisation au moyen d'un acide fort tel que l'acide perchlorique ou l'acide chlorhydrique.

Lorsque l'on utilise une suspension de particules non colloïdales, on peut préparer celle-ci par précipitation du composé minéral dans des conditions telles que l'on limite le grossissement des grains du précipité formé à une valeur inférieure à 10 µm. De préférence la granulométrie moyenne des particules est inférieure ou égale à 1 µm. Dans ce cas, on contrôle étroitement les paramètres de la précipitation de façon à favoriser la multiplication des germes en limitant leur grossissement au cours du temps pour obtenir des particules ultrafines et régulières.

Ceci peut être obtenu en maintenant le milieu réactionnel à une température suffisamment basse et en présence d'un agent épaississant de manière à ralentir et à maîtriser la formation des germes de précipité. On peut aussi réaliser la réaction de précipitation, dans des conditions telles que la surface de contact entre les réactifs soit, dés leur mise en contact dans le réacteur, la plus élevée possible.

Dans ce but, on peut utiliser les réactifs de précipitation dans un état de division aussi élevé que possible, par exemple en les mettant sous la forme d'aérosol ou de mousse avant de les introduire dans le réacteur de précipitation. De telles conditions favorisent une parfaite homogénéité du précipité car les mouvements de diffusion inhérents à toute opération de mélange de deux liquides miscibles sont ainsi supprimés et il en est de même pour les variations de concentrations locales qui se produisent pendant l'homogénéisation non instantanée du milieu réactionnel.

On peut aussi effectuer la réaction de précipitation dans un microréacteur de volume aussi faible que possible pour opérer dans des conditions de concentration et de durée pratiquement constantes. Dans ce cas, on introduit en continu chacun des réactifs avec un débit d'introduction fixé en fonction de la vitesse de précipitation et on évacue en continu les produits de la réaction. La réaction s'effectue ainsi à concentration constante et les produits réactionnels sont éliminés au fur et à mesure qu'ils se forment.

Pour réaliser la réaction de précipitation, il est par ailleurs préférable d'opérer en phase homogène afin d'obtenir une bonne régularité granulométrique. Ceci peut être obtenu en utilisant des réactifs en solution dans un solvant commun qui peut par exemple être de l'éthanol dans le cas de l'hydrolyse d'un ou plusieurs alcoolates pour former des oxydes ou hydroxydes simples ou mixtes.

Selon un mode préféré de mise en oeuvre du procédé de l'invention, on prépare la suspension de particules non colloïdales en appliquant de l'énergie au milieu réactionnel pendant la réaction de précipitation. Cette énergie peut être une énergie mécanique, par exemple de l'énergie ultrasonore, ou de l'énergie électrique, par exemple un champ électrique alternatif de tension et de fréquence convenablement choisies, ou encore consister en une irradiation.

Cette énergie permet d'empêcher l'agglomération des grains précipités et d'obtenir ainsi des particules finement divisées.

Cette application d'énergie peut être associée à l'emploi d'un microréacteur continu pour contrôler les réactions de précipitation comme on l'a décrit ci-dessus.

Dans le cas où l'on forme une suspension de particules colloïdales par précipitation du composé minéral suivie ou non d'un traitement de peptisation, on peut aussi appliquer de l'énergie au milieu réactionnel lors des réactions de précipitation et/ou de peptisation pour obtenir des particules ultrafines et les maintenir dans l'état de division voulu.

Après préparation de la suspension de particules colloïdales ou non colloïdales, on forme sur le substrat poreux et perméable une couche mince du composé minéral en utilisant de préférence la technique d'engobage.

On rappelle que la technique d'engobage appliquée au dépôt d'une suspension de particules solides dans un liquide, consiste à mettre en contact la paroi interne et/ou externe du substrat poreux avec cette suspension susceptible de former la couche que l'on désire déposer sur le substrat poreux. De façon plus précise, cette mise en contact se fait par mise en communication du substrat avec un bac contenant la suspension de particules colloïdales ou non colloïdales ; le bac est muni d'une membrane déformable qui permet, sous l'influence de la pression d'un fluide, d'engendrer des variations de volume à l'intérieur du bac, ce qui provoque la montée ou la descente de la suspension de particules le long du substrat poreux.

Pour obtenir une couche homogène et adhérant au substrat poreux, on peut ajuster les propriétés rhéologiques et superficielles de la suspension au moyen d'un ou plusieurs additifs pyrolisables lors du traitement de cuisson, qui sont choisis parmi les agents tensio-actifs, les agents visco-actifs et les liants organiques.

L'utilisation d'agents tensio-actifs permet d'améliorer l'adhérence de la couche sur le substrat. L'agent tensio-actif peut être par exemple l'alcool polyvinylique. Les agents visco-actifs permettent d'obtenir une suspension de viscosité adaptée, ce qui exerce un effet sur la compacité du dépôt, facteur essentiel pour obtenir une bonne cohésion. Les agents visco-actifs peuvent être constitués par des dérivés de la cellulose tels que la carboxyméthyl cellulose.

Généralement, il est souhaitable que la suspension présente une viscosité de 10 à 50 mPa. s (10 à 50 cP) et celle-ci peut être également ajustée en modifiant la concentration en particules de la suspension. En effet, il est préférable de limiter le plus possible la proportion d'additifs puisque ceux-ci doivent être éliminés ensuite lors du traitement de cuisson. La présence d'un liant organique dans la suspension a pour but de faciliter le dépôt des particules et leur cohésion sur le substrat. Toutefois, il est nécessaire que le liant ne perturbe pas l'organisation de la couche lors de son élimination par chauffage. Aussi, il est parfois avantageux d'utiliser un liant pyrolysable à température modérée, par exemple une solution de nitrocellulose dans un solvant approprié. On peut cependant utiliser des liants pyrolysables à température plus élevée, par exemple de l'alcool polyvinylique.

On peut aussi améliorer les propriétés de la suspension en choisissant de façon appropriée le liquide de celle-ci, qui peut être constitué par une solution aqueuse, une solution organique ou leurs mélanges. Lorsque l'on utilise une solution hydroalcoolique, l'incorporation homogène du liant dans la suspension peut être obtenue en dissolvant un collodion cellulosique dans un alcool, en éliminant ensuite par ultrafiltration la majeure partie de l'eau de la suspension hydroalcoolique et en ajoutant enfin le collodion.

Pour minimiser les phénomènes de fissuration pouvant se produire lors du séchage et de la cuisson ultérieurs de la couche, il est avantageux de déposer une couche d'épaisseur très faible, par exemple d'épaisseur au plus égale à 1 μm, car ceci réduit considérablement la prépondérance des contraintes de retrait à l'intérieur de la couche par rapport aux forces d'adhésion des particules au substrat. De plus, l'utilisation d'épaisseurs aussi faibles permet l'obtention de membranes très perméables, particulièrement intéressantes pour certaines applications industrielles.

On peut atteindre une épaisseur aussi faible en accordant convenablement le volume poreux ouvert du substrat aux propriétés rhéologiques et superficielles de la suspension, le volume du dépôt variant directement avec la porosité ouverte du substrat.

Il est par ailleurs souhaitable dans certains cas de soumettre le substrat à un prétraitement permettant d'améliorer l'adhérence entre la couche microporeuse et le substrat en favorisant par exemple le développement de liaisons chimiques entre la couche et le substrat lors de la cuisson.

Selon un premier mode de réalisation, ce prétraitement consiste en une attaque chimique ménagée des grains superficiels du substrat poreux et perméable, réalisée par exemple au moyen d'une lessive alcaline dans des conditions de concentration, de température et de durée permettant de limiter à la valeur voulue l'attaque superficielle pour faciliter l'accrochage ultérieur de la couche mince du composé minéral.

Selon un second mode de réalisation, ce prétraitement consiste à fixer dans la porosité superficielle du substrat un composé susceptible de former avec le ou les constituants de la couche, une solution solide ou un oxyde mixte. Dans le cas d'une couche mince d'oxyde de zirconium, un tel composé peut être le ou les constituants stabilisants de cet oxyde, par exemple de l'oxyde d'yttrium, un oxyde de lanthanide, de l'oxyde de calcium ou de l'oxyde de magnésium.

Le dépôt dans la porosité superficielle du substrat du composé stabilisant permet d'assurer une bonne cohésion entre le substrat macroporeux et la couche microporeuse. Dans ce but, on peut aussi déposer à la surface du substrat un apprêt réactif vis-à-vis de la couche, un traitement thermique approprié permettant de créer ensuite les liaisons nécessaires à l'adhérence de la couche active sur le substrat. Ceci peut être obtenu en imprégnant, par exemple, la zone superficielle du substrat poreux avec un sel d'yttrium pyrolysable et en traitant ensuite thermiquement le substrat ainsi imprégné pour transformer le sel d'yttrium en oxyde d'yttrium qui pourra réagir ensuite avec la couche déposée lors du traitement de cuisson.

Selon une variante, on peut aussi fixer dans la porosité superficielle du substrat un composé constitué par l'un des réactifs utilisés pour la formation du composé minéral constituant la couche.

Dans ce cas, la suspension utilisée pour le dépôt contient au moins un précurseur dudit composé minéral de façon à former la couche de composé minéral par réaction "in situ" dudit réactif et dudit précurseur.

La réaction peut être effectuée lors du traitement thermique de cuisson à une température modérée.

A titre d'exemple, on peut obtenir ainsi une couche d'hydroxyde de zirconium stabilisé par l'yttrium ou le magnésium, en imprégnant tout d'abord le substrat poreux par un sel hydraté d'yttrium ou de magnésium et en effectuant ensuite un dépôt d'alcoolate de zirconium éventuellement associé à un alcoolate d'yttrium ou de magnésium sur le substrat ainsi prétraité.

Par chauffage à une température au moins égale à la température de décomposition de l'alcoolate, on forme de l'oxyde de zirconium mais un traitement thermique complémentaire est nécessaire pour stabiliser la couche d'oxyde de zirconium par l'oxyde d'yttrium ou de magnésium et ceci peut être effectué en une seule fois lors de la cuisson.

Après dépôt de la couche sur le substrat poreux, on soumet celle-ci à un séchage, puis à un traitement thermique de cuisson. Le séchage doit être réalisé à la température ambiante pour éviter le phénomène de fissuration. En effet, la cinétique d'évaporation du liquide intersticiel étant différente à la surface du dépôt et dans les couches internes, on observe fréquemment l'apparition de fissures occasionnées par des différences de retrait au cours du séchage. Aussi, il est bon de ralentir fortement la vitesse d'évaporation du solvant pour obtenir un séchage homogène, ce qui exclut toute élévation de température pendant cette phase.

Le traitement de cuisson est réalisé à une température de 400 à 1100°C et sa température et sa durée sont choisies en fonction de la nature de la couche déposée et des rayons de pores que l'on veut obtenir.

Les substrats poreux et perméables que l'on utilise selon le procédé de l'invention, doivent présenter sur la surface destinée à recevoir la couche mince, une texture poreuse de rayon de pore inférieur à 2 μm, et des irrégularités de l'état de surface inférieures à quelques μm, de manière à éviter une pénétration importante de la couche dans les pores du substrat et la formation de fissures ou de défauts macroporeux. Ces substrats doivent présenter, par ailleurs, une bonne tenue mécanique, une perméabilité élevée et un état de surface satisfaisant. Ils peuvent être constitués d'un support grossier présentant des pores de rayon élevé (de 4 à 20 μm par exemple), qui est recouvert d'une couche mince de quelques dizaines de μm possédant une texture beaucoup plus fine (0,05 à 2 μm). Ils peuvent être réalisés en métal, par exemple en nickel, ou en matériau céramique, par exemple en alumine.

D'autres caractéristiques et avantages de l'invention apparaîtront mieux à la lecture des exemples suivants donnés bien entendu à titre illustratif et non limitatif.

EXEMPLE 1

On fabrique une membrane minérale perméable comportant une couche microporeuse d'oxyde de zirconium sur un substrat poreux et perméable en alumine ayant une structure bicouche : une couche macro-poreuse épaisse et mécaniquement résistante, d'un rayon de pore moyen de 5 à 10 μm, revêtue par une couche mince ayant un rayon de pore moyen de 0,2 μm.

On prépare tout d'abord une suspension de particules colloïdales d'hydroxyde de zirconium en hydrolysant une solution alcoolique de propylate de zirconium par un mélange hydroalcoolique que l'on introduit lentement tout en soumettant le milieu réactionnel sans interruption à l'action d'un générateur d'ultrasons d'une fréquence de 20 kilocycles.

Après précipitation, on réalise une peptisation de la suspension d'hydroxyde en soumettant également le milieu réactionnel à l'action des ultrasons pendant 4 heures. Pour cette peptisation, on utilise de l'acide perchlorique en quantité telle qu'elle correspond à 0,07 mol d'acide perchlorique par mol de propylate de zirconium.

On obtient ainsi une suspension colloïdale d'hydroxyde de zirconium ayant une concentration en zirconium de l'ordre de 20 à 30 g/l et une granulométrie de 100 nm (1000 Å). Cette concentration en zirconium est d'environ 80% supérieure à celle qui est atteinte sous simple agitation mécanique.

On ajoute alors à la suspension un agent visco-actif constitué par de l'alcool polyvinylique de façon à obtenir une viscosité de 25 mPa.s (25 cP) et on dépose l'hydroxyde de zirconium sur la surface du substrat poreux en utilisant la technique d'engobage. On sèche alors l'ensemble pendant 4 h à la température ambiante, dans de l'air ayant une humidité de 60%, puis on le cuit à 600°C pendant 2 h.

On obtient ainsi une membrane comportant une couche microporeuse d'oxyde de zirconium ayant une épaisseur de 3 μm, un rayon moyen de pores de 8 nm (80 Å) et une perméabilité à l'azote de $19,7 \cdot 10^{-6}$ mol/m².s.Pa ($1600 \cdot 10^{-7}$ mole/cm². min.cm de Hg).

EXEMPLE 2

Cet exemple illustre la préparation d'une membrane minérale perméable comportant une couche microporeuse d'oxyde de zirconium stabilisé par de l'oxyde d'yttrium.

On prépare comme dans l'exemple 1 une suspension de particules colloïdales d'hydroxyde de zirconium et on lui ajoute une quantité de sel d'yttrium qui correspond à 8% en mole de $Y_2O_3$, qui jouera ensuite le rôle d'oxyde stabilisant de la zircone.

Cet ajout permet de supprimer les effets de la transformation de la variété monoclinique de la zircone en variétété quadratique, particulièrement en ce qui concerne les retraits consécutifs à la variation de volume correspondante.

On dépose ensuite comme dans l'exemple 1 une couche de particules colloïdales d'hydroxyde de zirconium contenant de l'yttrium sur un substrat identique à celui de l'exemple 1, puis on réalise le séchage et la cuisson dans les mêmes conditions que celles de l'exemple 1.

On obtient ainsi une membrane comportant une couche active de structure $ZrO_2$ stabilisé par $Y_2O_3$ ayant une épaisseur de 3 μm, un rayon moyen de pores de 7 nm (70 Å) et une perméabilité à l'azote de $18,5 \cdot 10^{-6}$ mol/m².s.Pa ($1500 \cdot 10^{-7}$ mole/cm².min. cm de Hg).

EXEMPLE 3

Dans cet exemple, on prépare une membrane minérale perméable comportant une couche microporeuse d'oxyde de zirconium stabilisé par de l'oxyde de magnésium ou de calcium.

On utilise le même mode opératoire que dans l'exemple 2 en remplaçant le sel d'yttrium par un sel de magnésium ou de calcium, et obtient des résultats analogues à ceux de l'exemple 2.

EXEMPLE 4

Cet exemple concerne la fabrication d'une membrane minérale perméable comportant une couche microporeuse d'oxyde de titane déposée sur un substrat tubulaire, poreux et perméable en alumine tel que celui de l'exemple 1.

On prépare tout d'abord une suspension de particules colloïdales d'hydroxyde de titane en hydrolysant une solution alcoolique de butylate de titane par un excès d'eau tout en soumettant le milieu réactionnel à l'action d'un générateur d'ultrasons d'une fréquence de 35 kilocycles, pendant une heure. On réalise ensuite la peptisation de la suspension d'hydroxyde de titane ainsi obtenue à la température ambiante au moyen d'acide chlorhydrique en utilisant une quantité d'acide chlorhydrique telle qu'elle correspond à 0,07 mol d'acide chlorhydrique par mole de butylate de titane. On effectue la peptisation pendant deux heures en soumettant également le milieu réactionnel à l'action de générateur d'ultrasons. On obtient ainsi une suspension de particules colloïdales d'hydroxyde de titane ayant une granulométrie de l'order de 30 nm (300 Å). On concentre ensuite la suspension à 60°C sous ultrasons pour obtenir une concentration en particules de 30 g/l.

On ajuste alors la viscosité de la suspension à 25 mPa.s (25 cP) et on dépose les particules colloïdales d'hydroxyde de titane sur la surface interne du substrat tubulaire par la technique d'engobage. Après un séchage lent à la température ambiante, on soumet l'ensemble à une cuisson effectuée à une température de 600°C pendant 1 h. Le rayon moyen de pore de la couche microporeuse d'oxyde de titane est de l'ordre de 4 nm (40 Å). Son épaisseur est de 4 μm et sa perméabilité à l'azote de 12,3·10–6 mol/m2.s.Pa (1000·10–7 mole/cm2.min.cm Hg).

Si la température de cuisson est de 800°C au lieu de 600°C, le rayon moyen de pores après cuisson s'élève à 8 nm (80 Å).

## EXEMPLE 5

Cet exemple concerne la fabrication d'une membrane comportant une couche microporeuse d'oxyde de titane préparé dans les mêmes conditions que celle de l'exemple 4, excepté que l'on réalise l'hydrolyse en phase homogène au moyen d'un mélange hydroalcoolique au lieu d'utiliser de l'eau. La membrane obtenue présente des caractéristiques de rayons de pore et de perméabilité analogues à celles de la membrane de l'exemple 4. En revanche, le spectre de répartition de pores autour de la valeur moyenne est plus homogène que dans le cas de la membrane de l'exemple 4.

Ainsi, le fait de réaliser la précipitation en phase homogène conduit à une texture plus régulière.

## EXEMPLE 6

Cet exemple illustre le préparation d'une membrane poreuse comportant une couche microporeuse d'oxyde de zirconium obtenue à partir d'une suspension aqueuse de particules colloïdales d'hydroxyde de zirconium.

On prépare la suspension de particules colloïdales d'hydroxyde de zirconium en utilisant la méthode de·Müller. Dans ce but, on ajoute lentement de l'ammoniaque à une solution aqueuse de nitrate de zirconium, on lave à l'eau le précipité obtenu et on le redissout dans une solution de nitrate de zirconium, ce qui conduit à l'obtention d'une solution colloïdale. Par évaporation à chaud, on règle ensuite la viscosité de la suspension pour l'amener à une valeur de 30 mPa. s (30 cP). On dépose ensuite les particules colloïdales sur un substrat poureux en alumine identique à celui de l'exemple 1 par la technique d'engobage, puis on sèche la couche et on la cuit à une température de 600°C pendant 1 h.

On obtient ainsi une couche microporeuse d'oxyde de zirconium ayant un rayon moyen de pore de 4 nm (40 Å) et une perméabilité à l'azote de 18,5·10–6 mol/m2.s.Pa (1500·10–7 mol/cm2.min.cm Hg).

## EXEMPLE 7

Cet exemple illustre la préparation d'une membrane poreuse comportant une couche microporeuse d'oxyde de titane obtenue à partir d'une suspension de particules non colloïdales.

On utilise dans ce cas, pour la précipitation, un réacteur ayant un volume d'environ 40 cm3 à l'intérieur duquel on met en circulation une solution de butylate de titane dans de l'éthanol et un mélange hydroalccolique à des débits constants d'environ 10 cm3/min. La concentration en butylate de titane de la solution alcoolique et la quantité d'eau dans le mélange hydroalcoolique sont telles que l'eau se trouve en excès par rapport au butylate de titane. On soumet simultanément le milieu réactionnel à l'action d'un générateur d'ultrasons d'une fréquence de 30 kilocycles et on extrait en continu les produits formés dans le réacteur. On obtient ainsi à la sortie du réacteur une suspension de particules d'hydroxyde de titane que l'on concentre ensuite pour obtenir une concentration de 30 g/l. On dépose les particules d'hydroxyde sur un substrat poreux et perméable en alumine identique à celui de l'exemple 1 par engobage, puis on soumet la couche à un séchage effectué dans les mêmes conditions que celles des exemples 4 et 5 et on cuit à une température de 600°C pendant 1 h. On obtient ainsi une couche d'oxyde de titane ayant un rayon moyen de pore de 15 nm (150 Å) et une perméabilité à l'azote de 43,2·10–6 mol/m2.s.Pa (3500·10–7 mole/cm2.min.cm Hg).

## EXEMPLE 8

Cet exemple illustre la préparation d'une membrane poreuse comportant une couche microporeuse d'oxyde de titane déposée sur un substrat poreux et perméable en alumine identique à celui de l'exemple 1.

On prépare tout d'abord une suspension de particules colloïdales d'hydroxyde de titane en hydrolysant du butylate de titane en solution diluée dans un mélange hydroalcoolique, en présence d'acide chlorhydrique ayant un pH de 1,5. Ceci permet d'éviter l'emploi d'ultrasons, sans toutefois conduire à des particules ayant des dimensions aussi faibles.

On obtient ainsi une suspension colloïdale d'hydroxyde de titane ayant une granulométrie moyenne voisine de 60 nm (600 Å).

Si l'on opère en soumettant le milieu réactionnel à l'action d'un générateur d'ultrasons d'une fréquence de 35 kilocycles comme dans l'exemple 4, on obtient une suspension dont les particules colloïdales ont une granulométrie moyenne de 30 nm (300 Å).

On ajoute alors à la suspension un agent viscoactif constitué par de l'alcool polyvinylique de façon à obtenir une viscosité de 25 mPas et on dépose l'hydroxyde de titane sur la surface du substrat poreux en utilisant la technique d'engobage. On sèche alors l'ensemble pendant 4 heures à la température ambiante, dans de l'air ayant une humidité de 60%, puis on le cuit à 600°C pendant une heure.

On obtient ainsi une membrane comportant une couche microporeuse d'oxyde de titane ayant un rayon moyen de pore voisin de 4 nm (40 Å) et une perméabilité à l'azote de $14,8 \cdot 10^{-6}$ mol/m².s.Pa ($1200 \cdot 10^{-7}$ mol/cm².min.cm Hg).

## EXEMPLE 9

Cet exemple illustre la fabrication d'une membrane minérale perméable comportant une couche microporeuse d'oxyde de zirconium déposée sur un substrat poreux identique à celui de l'exemple 1.

Dans cet exemple, on suit sensiblement le même mode opératoire que dans l'exemple 1, mais au lieu de soumettre le milieu réactionnel à l'action d'un générateur d'ultrasons, on utilise un apport d'énergie électrique pour préparer la suspension de particules colloïdales d'hydroxyde de zirconium.

On part d'une solution alcoolique de butylate de zirconium que l'on hydrolyse par de l'eau introduite lentement et de façon continue dans la solution de butylate de zirconium que l'on soumet à l'action d'un champ électrique sous une tension élevée de l'ordre de 8 à 10 kV.

On obtient ainsi une suspension de particules colloïdales d'hydroxyde de zirconium dont la taille moyenne est voisine de 80 nm (800 Å). La concentration de la suspension en particules colloïdales est d'environ 25% supérieur à celle qui est atteinte par une simple agitation mécanique. On dépose ensuite l'hydroxyde de zirconium sur la surface du substrat poreux, on sèche et on cuit l'ensemble en utilisant le même mode opératoire que dans l'exemple 1.

On obtient ainsi une membrane comportant une couche microporeuse d'oxyde de zirconium ayant des caractéristiques analogues à celles obtenues dans l'exemple 1.

## EXEMPLE 10

Cet exemple illustre la préparation d'une membrane minérale perméable comportant une couche microporeuse d'oxyde de zirconium sur un substrat poreux et perméable en alumine analogue à celui de l'exemple 1.

Dans cet exemple, on prépare une suspension de particules colloïdales d'hydroxyde de zirconium en suivant le même mode opératoire que dans l'exemple 9, mais en ajoutant un agent peptisant lors de la réaction d'hydrolyse du butylate de zirconium. A cet effet, on ajoute de l'acide chlorhydrique ayant un pH égal à 1 à la fin de l'opération d'hydrolyse.

On obtient ainsi une suspension de particules colloïdales d'hydroxyde de zirconium ayant des caractéristiques analogues à celles obtenues dans l'exemple 9, mais la suspension présente une meilleure stabilité car il ne se produit aucune précipitation d'hydroxyde de zirconium. En revanche, dans le cas de la suspension obtenue dans l'exemple 9, il est nécessaire d'utiliser cette suspension très rapidement car sinon lors du stockage il y aurait une précipitation de l'hydroxyde de zirconium.

On utilise cette suspension dans les mêmes conditions que celles de l'exemple 9 pour former une membrane comportant une couche microporeuse d'oxyde de zirconium et les caractéristiques de la couche obtenue sont analogues à celles obtenues dans l'exemple 1.

## EXEMPLE 11

Cet exemple illustre la préparation d'une membrane minérale poreuse et perméable comportant une couche microporeuse d'oxyde de zirconium déposée sur un substrat poreux en alumine identique à celui de l'exemple 1, mais qui a subi un prétraitement consistant en une attaque chimique ménagée.

Pour réaliser ce prétraitement, on immerge le substrat tubulaire en alumine pendant une heure à 50°C dans une solution de NaOH ayant un pH de 14, puis on le lave et on le sèche.

On prépare une suspension colloïdale d'hydroxyde de zirconium peptisé et on ajuste la viscosité de la suspension à 30 mPas (30 cP) par concentration et addition d'un liant plyvinylique.

On dépose ensuite le gel peptisé ainsi obtenu par la technique d'engobage sur la surface interne du substrat tubulaire en alumine qui a été prétraité pour améliorer l'adhérence de la couche d'oxyde de zirconium sur le substrat.

On soumet alors le substrat revêtu à une cuisson à 600°C pendant une heure. On obtient ainsi une couche microporeuse ayant un rayon moyen de pore inférieur à 7,5 nm (75 Å) et une perméabilité à l'azote de $17,28 \cdot 10^{-6}$ mol/m².s.Pa ($1400 \cdot 10^{-7}$ mol/cm².min.cm Hg).

## Revendications

1. Procédé de fabrication d'une membrane minérale, poreuse et perméable, par dépôt sur un substrat poreux d'une couche mince, suivi d'un séchage et d'une cuisson, caractérisé en ce que la couche mince est une couche d'au moins un composé minéral choisi parmi les oxydes métalliques simples ou mixtes, sauf l'oxyde d'aluminium et les oxydes mixtes d'aluminium, les hydroxydes métalliques simples ou mixtes, sauf l'hydroxyde d'aluminium et les hydroxydes mixtes d'aluminium, et leurs mélanges en ce que l'on forme cette couche sur le substrat à partir d'une suspension dans un liquide de particules colloïdales ou non colloïdales dudit composé ou d'un précurseur dudit composé ayant des dimensions de grains inférieures à 10 μm, ladite suspension étant obtenue par précipitation à partir d'une solution d'alcoolate ou de sel métallique, et en ce que l'on réalise la cuisson à une température comprise entre 400°C et 1100°C.

2. Procédé selon la revendication 1, caractérisé en ce que la suspension comprend de plus une charge afin de former sur le substrat une couche mince dudit composé minéral dans laquelle est dispersée une charge.

3. Procédé selon l'une quelconque des revendications 1 et 2, caractérisé en ce que les oxydes et les hydroxydes métalliques simples ou mixtes sont des oxydes et hydroxydes simples ou mixtes de métaux choisis parmi le titane, le zirconium, le silicium, le magnésium, le calcium, le cobalt, le manganèse et le nickel.

4. Procédé selon l'une quelconque des revendications 1 et 2, caractérisé en ce que la suspension comprend un premier composé minéral choisi parmi l'oxyde de titane, l'oxyde de zirconium det l'oxyde de silicium et au moins un second composé minéral choisi parmi l'oxyde d'yttrium, les oxydes de lanthanides, l'oxyde de vanadium, l'oxyde de calcium et l'oxyde de magnésium.

5. Procédé selon l'une quelconque des revendications 1 à 4, caractérisé en ce que l'on prépare la suspension de particules colloïdales par précipitation dudit composé minéral suivie d'un traitement de peptisation du précipité pour le transformer en particules colloïdales.

6. Procédé selon l'une quelconque des revendications 1 à 4, caractérisé en ce que l'on prépare la suspension de particules colloïdales par précipitation dudit composé minéral et application d'énergie au milieu réactionnel.

7. Procédé selon l'une quelconque des revendications 1 à 5, caractérisé en ce que l'on prépare la suspension de particules non colloïdales par précipitation dudit composé minéral dans des conditions telles qu'on limite le grossissement des grains du précipité formé à une valeur inférieure à 10 µm.

8. Procédé selon la revendication 7, caractérisé en ce que l'on effectue la réaction de précipitation en phase homogène.

9. Procédé selon la revendication 7, caractérisé en ce que l'on effectue la précipitation à partir de réactifs sous la forme d'aérosols ou de mousses.

10. Procédé selon l'une quelconque des revendications 1 à 8, caractérisé en ce que le liquide de la suspension est une solution aqueuse, une solution organique ou leurs mélanges.

11. Procédé selon l'une quelconque des revendications 1 à 10, caractérisé en ce que la suspension contient au moins un additif pyrolysable lors du traitement de cuisson, choisi parmi les agents tensioactifs, les agents viscoactifs et les liants organiques.

12. Procédé selon l'une quelconque des revendications 6 à 9, caractérisé en ce que lors de la réaction de précipitation et/ou de peptisation, on maintient les particules colloïdales ou non colloïdales à l'état finement divisé par application continue d'énergie au milieu réactionnel.

13. Procédé selon la revendication 12, caractérisé en ce que l'énergie est de l'énergie ultrasonore.

14. Procédé selon l'une quelconque des revendications 1 à 13, caractérisé en ce que l'on dépose la couche de composé minéral sur le substrat par engobage.

15. Procédé selon l'une quelconque des revendications 1 à 14, caractérisé en ce que la couche du composé minéral a une épaisseur au plus égale à 1 µm.

16. Procédé selon l'une quelconque des revendications 1 à 14, caractérisé en ce que l'on soumet le substrat poreux et perméable à un prétraitement pour améliorer l'adhérence de la couche sur le substrat.

17. Procédé selon la revendication 16, caractérisé en ce que le prétraitement consiste à fixer dans la porosité du substrat un composé susceptible de former avec le ou les constituants de la couche une solution solide ou un oxyde mixte.

18. Procédé selon la revendication 17, caractérisé et ce que le composé est l'un des réactifs utilisés pour la formation du composé minéral constituant la couche.

19. Procédé selon la revendication 18, caractérisé en ce que la suspension contient au moins un précurseur dudit composé minéral, de façon à former la couche de composé minéral par réaction "in situ" dudit réactif et dudit précurseur.

20. Procédé selon la revendication 16, caractérisé en ce que le prétraitement consiste à effectuer une attaque chimique ménagée des grains superficiels du substrat poreux et perméable.

**Patentansprüche**

1. Verfahren zur Herstellung einer mineralischen, porösen und permeablen Membran durch Abscheidung einer dünnen Schicht auf einem porösen Substrat, anschließendes Trocknen und Aushärten, dadurch gekennzeichnet, daß die dünne Schicht eine Schicht aus wenigstens einer mineralischen Verbindung ist, die ausgewählt ist aus den einfachen oder gemischten Metalloxiden, ausgenommen Aluminiumoxid und Aluminiummischoxide, den einfachen oder gemischten Metallhydroxiden, ausgenommen Aluminiumhydroxid und Aluminiummischhydroxide, und ihren Mischungen, daß man diese Schicht auf dem Substrat mit Hilfe einer Suspension in einer Flüssigkeit aus kolloidalen oder nicht-kolloidalen Partikeln der genannten Verbindung oder eines Vorläufers der genannten Verbindung bildet, mit Korngrößen von weniger als 10 µm, wobei die genannte Suspension durch Ausscheidung aus einer Alkoholatlösung oder Metallsalzlösung erhalten wird, und daß man das Aushärten bei einer Temperatur, die zwischen 400°C und 1100°C liegt, ausführt.

2. Verfahren nach Anspruch 1, dadurch gekennzeichnet, daß die Suspension außerdem einen Füllstoff enthält, um auf dem Substrat eine dünne Schicht der genannten mineralischen Verbindung auszubilden, in der ein Füllstoff dispergiert ist.

3. Verfahren nach einem der Ansprüche 1 und 2, dadurch gekennzeichnet, daß die einfachen oder gemischten Metalloxide und -hydroxide die einfachen oder gemischten Oxide und Hydroxide von Metallen sind, die unter Titan, Zirkon, Silicium, Magnesium, Calcium, Kobalt, Mangan und Nickel ausgewählt sind.

4. Verfahren nach einem der Ansprüche 1 und 2, dadurch gekennzeichnet, daß die Suspension eine erste mineralische Verbindung enthält, die aus Titanoxid, Zirkonoxid und Siliciumoxid ausgewählt ist, und wenigstens eine zweite mineralische Verbindung enthält, die unter Yttriumoxid, den Oxiden von Lanthaniden, Vanadiumoxid, Calciumoxid und Magnesiumoxid ausgewählt ist.

5. Verfahren nach einem der Ansprüche 1 bis 4, dadurch gekennzeichnet, daß man die kolloidale Partikelsuspension durch Abscheidung der mineralischen Verbindung, gefolgt von einer Peptisierungsbehandlung der mineralischen Verbindung zur Umwandlung in kolloidale Partikel herstellt.

6. Verfahren nach einem der Ansprüche 1 bis 4, dadurch gekennzeichnet, daß man die kolloidale Partikelsuspension durch Abscheidung der genannten mineralischen Verbindung und Zuführung von Energie zum Reaktionsmilieu herstellt.

7. Verfahren nach einem der Ansprüche 1 bis 5, dadurch gekennzeichnet, daß man die Suspension aus nicht-kolloidalen Partikeln durch Abscheidung der genannten mineralischen Verbindung unter solchen Bedingungen herstellt, daß man das Größenwachstum der Körner des gebildeten Niederschlags auf eine Größe von weniger als 10 µm beschränkt.

8. Verfahren nach Anspruch 7, dadurch gekennzeichnet, daß man die Abscheidereaktion in homogener Phase ausführt.

9. Verfahren nach Anspruch 7, dadurch gekennzeichnet, daß man die Abscheidung mit Hilfe von Reagenzien in Form von Aerosolen oder Schäumen ausführt.

10. Verfahren nach einem der Ansprüche 1 bis 8, dadurch gekennzeichnet, daß die Flüssigkeit der Suspension eine wäßrige Lösung, eine organische Lösung oder eine Mischung aus diesen ist.

11. Verfahren nach einem der Ansprüche 1 bis 10, dadurch gekennzeichnet, daß die Suspension wenigstens einen bei der Aushärtebehandlung pyrolysierbaren Zusatz enthält, der unter den grenzflächenaktiven Wirkstoffen, den vis-koaktiven Wirkstoffen und den organischen Bindemitteln ausgewählt ist.

12. Verfahren nach einem der Ansprüche 6 bis 9, dadurch gekennzeichnet, daß bei der Abscheidereaktion und/oder der Peptisierung man die kolloidalen oder nicht-kolloidalen Partikel in feinverteiltem Zustand hält, indem dem Reaktionsmilieu kontinuierlich Energie zugeführt wird.

13. Verfahren nach Anspruch 12, dadurch gekennzeichnet, daß die Energie Ultraschallenergie ist.

14. Verfahren nach einem der Ansprüche 1 bis 13, dadurch gekennzeichnet, daß man die Schicht aus der mineralischen Verbindung auf dem Substrat durch Engobierung niederschlägt.

15. Verfahren nach einem der Ansprüche 1 bis 4, dadurch gekennzeichnet, daß die Schicht aus der mineralischen Verbindung eine Dicke von höchstens 1 µm ausweist.

16. Verfahren nach einem der Ansprüche 1 bis 14, dadurch gekennzeichnet, daß man das poröse und permeable Substrat einer Vorbehandlung unterwirft, um das Anhaften der Schicht auf dem Sustrat zu verbessern.

17. Verfahren nach Anspruch 16, dadurch gekennzeichnet, daß die Vorbehandlung daraus besteht, in den Poren des Sustrats eine Verbindung anzubringen, die dazu geeignet ist, mit dem oder den Bestandteil(en) der Schicht eine feste Lösung oder ein Mischoxid zu bilden.

18. Verfahren nach Anspruch 17, dadurch gekennzeichnet, daß die Verbindung eines der für die Bildung der mineralischen Verbindung, die die Schicht bildet, verwendeten Reagenzien ist.

19. Verfahren nach Anspruch 18, dadurch gekennzeichnet, daß die Suspension wenigstens einen Vorläufer der genannten mineralischen Verbindung enthält, um die Schicht aus der mineralischen Verbindung durch Reaktion des genannten Reagenzes mit dem genannten Vorläufer "in situ" zu bilden.

20. Verfahren nach Anspruch 16, dadurch gekennzeichnet, daß die Vorbehandlung darin besteht, einen vorsichtingen chemischen Angriff auf die an der Oberfläche liegenden Körner des porösen und permeablen Substrats auszuführen.

## Claims

1. Process for the production of a porous, permeable, mineral membrane through the deposition on a porous substrate of a thin layer, followed by drying and annealing, characterized in that the thin layer is a layer of at least one mineral compound chosen from among the single or mixed metal oxides, except aluminium oxide and mixed aluminium oxides, single or mixed metal hydroxides, except aluminium hydroxide and mixed aluminium hydroxides, and mixtures thereof, that this layer is formed on the substrate from a suspension in a liquid of colloidal or non-colloidal particles of said compound or a precursor thereof having particle sizes below 10 µm, said suspension being obtained by precipitation from a solution of alkoxide or metal salt and in that annealing takes place at a temperature between 400 and 1100°C.

2. Process according to claim 1, characterized in that the suspension also contains a filler, in order to form on the substrate a thin layer of said mineral compound in which a filler is dispersed.

3. Process according to either of the claims 1 and 2, characterized in that the simple or mixed metal hydroxides and oxides are simple or mixed hydroxides and oxides of metals chosen from among titanium, zirconium, silicon, magnesium, calcium, cobalt, manganese and nickel.

4. Process according to either of the claims 1 and 2, characterized in that the suspension comprises a first mineral compound chosen from among titanium oxide, zirconium oxide and silicon oxide and at least one second mineral compound chosen from among yttrium oxide, oxides of lanthanides, vanadium oxide, calcium oxide and magnesium oxide.

5. Process according to any one of the claims 1 to 4, characterized in that the suspension of colloidal particles is prepared by precipitating said mineral compound followed by a peptization treatment of the precipitate to convert it into colloidal particles.

6. Process according to any one of the claims 1 to 4, characterized in that the suspension of colloidal particles is prepared by precipitating the said mineral compound and applying energy to the reaction medium.

7. Process according to any one of the claims 1 to 5, characterized in that suspension of non-colloidal particles is prepared by precipitating said mineral compound under conditions such that the enlargement of the particles of the precipitate formed is limited to a value below 10 μm.

8. Process according to claim 7, characterized in that the precipitation reaction takes place in the homogeneous phase.

9. Process according to claim 7, characterized in that the precipitation takes place on the basis of reagents in the form of aerosols or foams.

10. Process according to any one of the claims 1 to 8, characterized in that the suspension liquid is an aqueous solution, an organic solution or mixtures thereof.

11. Process according to any one of the claims 1 to 10, characterized in that the suspension contains at least one additive pyrolyzable during the annealing treatment and chosen from among surfactants, visco-active agents and organic binders.

12. Process according to any one of the claims 6 to 9, characterized in that during the precipitation and/or peptization reaction, the colloidal or non-colloidal particles are kept in the finely divided state by the continuous application of energy to the reaction medium.

13. Process according to claim 12, characterized in that the energy is ultrasonic energy.

14. Process according to any one of the claims 1 to 13, characterized in that the mineral compound layer is deposited on the substrate by engobing.

15. Process according to any one of the claims 1 to 14, characterized in that the layer of the mineral compound has a thickness of at the most 1 μm.

16. Process according to any one of the claims 1 to 14, characterized in that the porous, permeable substrate undergoes a pretreatment to improve the adhesion of the layer to the substrate.

17. Process according to claim 16, characterized in that the pretreatment consists of fixing in the porosity of the substrate a compound able to form with the constituent or constituents of the layer a solid solution or a mixed oxide.

18. Process according to claim 17, characterized in that the compound is one of the reagents used for the formation of the mineral compound constituting the layer.

19. Process according to claim 18, characterized in that the suspension contains at least one precursor of said mineral compound, so as to form the mineral compound layer by in situ reaction of said reagent and said precursor.

20. Process according to claim 16, characterized in that the pretreatment consists of carrying out chemical etching of the surface particles of the porous, permeable substrate.